# EUROPÄISCHE PATENTSCHRIFT

(11) **EP 1 627 219 B1**
(45) Veröffentlichungstag und Bekanntmachung des Hinweises auf die Patenterteilung: **23.12.2009**
(21) Anmeldenummer: 04725011.3
(22) Anmeldetag: 01.04.2004
(51) Int. Cl.: G01N 21/31, G01N 21/35

(54) **PROZESS-ABSORPTIONSSPEKTROMETER**
PROCESS ABSORPTION SPECTROMETER
SPECTROMETRE D'ABSORPTION POUR PROCESSUS

(30) Priorität: 01.04.2003 DE 10314793
(43) Veröffentlichungstag der Anmeldung: 22.02.2006
(73) Patentinhaber: SIEMENS AKTIENGESELLSCHAFT, 80333 München (DE)
(72) Erfinder: LUDWIG, Michael, 76149 Karlsruhe (DE)
(86) Internationale Anmeldenummer: PCT/EP2004/003473
(87) Internationale Veröffentlichungsnummer: WO 2004/088289

(56) Entgegenhaltungen:
- EP-A- 0 290 274
- WO-A-02/095506
- DE-A- 10 158 745
- TIAN G Y ET AL: "A Fieldbus-based intelligent sensor" MECHATRONICS, Bd. 10, 2000, Seiten 835-849, XP004201716

## Beschreibung

Das Prinzip der Absorptionsspektroskopie beruht auf der selektiven Absorption von Strahlung einer bestimmten Wellenlänge durch bestimmte Gase (Gasmoleküle), insbesondere im nahen Infrarotbereich (NIR). Die Strahlungsabsorption führt zur Entstehung eines für das jeweilige Gas charakteristischen Spektrums. Wenn es gelingt, ein Spektrometer selektiv auf das Spektrum einzustellen, das einem bestimmten Gas zuzuordnen ist, so ist das erhaltene Messsignal zur Anzahl der Moleküle, die sich in einem Messvolumen (Messzelle) zwischen einer Strahlungsquelle und einem Detektor des Spektrometers befinden, proportional. Für die industrielle Gasanalyse bekannte Verfahren sind beispielsweise die nicht-dispersive Infrarot (NDIR)-Spektroskopie, die Fouriertransform-Infrarot (FTIR)-Spektroskopie und die Diodenlaser-Spektroskopie.

Bei der so genannten In-line-Messung oder In-situ-Messung ist die Messzelle des Spektrometers entweder direkt in dem Messgasstrom eingebaut oder die das Messgas führende Leitung, z. B. ein Rohr oder ein Kamin, dient selbst als Messzelle. Die Strahlungsquelle und der Detektor, oder bei mehrkanaliger Messung mehrere Detektoren, sind daher an unterschiedlichen Stellen der Prozessanlage angeordnet, wozu das Spektrometer in zwei oder mehr Teilgeräte unterteilt ist. Diese Teilgeräte sind über spezielle Koppelleitungen miteinander verbunden, damit sie als Gesamtgerät funktionieren können. Die Koppelleitungen und die über sie laufenden Signale sind dabei technologie- bzw. gerätespezifisch ausgelegt (z. B. Hybridkabel mit elektrischen Leitungen und Glasfaserleitungen). Das Vorsehen und Verlegen solcher Spezialleitungen ist mit einem entsprechenden Aufwand verbunden.

Die EP 0 290 274 A offenbart ein Absorptionsspektrometer mit einer eine Strahlungsquelle enthaltenden ersten Einheit und einer weiteren, einen Detektor enthaltenden Einheit, wobei die beiden Einheiten an einen System-Bus angeschlossen sind.

Die Verwendung der Feldbustechnologie zur Einbindung verschiedenster Sensoren, unter anderem auch zur Gas- und Flüssigkeitsanalyse, in ein Überwachungssystem ist beispielsweise aus der WO 02/095506 A bekannt.

Der Erfindung liegt daher die Aufgabe zugrunde, den geräte- und montagetechnischen Aufwand bei In-situ-Absorptionsspektrometern zu verringern.

Gemäß der Erfindung wird die Aufgabe gelöst durch ein Prozess-Absorptionsspektrometer mit einer eine Strahlungsquelle enthaltenden Einheit und mindestens einer einen Detektor enthaltenden weiteren Einheit, wobei beide Einheiten als Feldgeräte ausgebildet und an einem Feldbus angeschlossen sind. Da die Einheiten des erfindungsgemäßen Spektrometers als Feldgeräte ausgebildet sind, können sie wie jedes andere Feldgerät ohne jeden Zusatzaufwand in einer Prozessanlage bzw. einem Prozessautomatisierungssystem installiert, parametriert und betrieben werden. Insbesondere die Verkabelung erfolgt standardmäßig wie bei anderen Feldgeräten.

Entsprechend einer vorteilhaften Weiterbildung des erfindungsgemäßen Spektrometers enthält die den Detektor enthaltende weitere Einheit Mittel zur Erzeugung eines Messergebnisses aus Messsignalen des Detektors und weiteren Signalen, die von der die Strahlungsquelle enthaltenden Einheit an die den Detektor enthaltende weitere Einheit übertragen werden. Bei den weiteren Signalen kann es sich beispielsweise um Referenzsignale handeln, die in der die Strahlungsquelle enthaltenden Einheit durch Referenzmessung an einem Referenzgas gewonnen werden und für die Erzeugung des Messergebnisses notwendig sind.

Diese Referenzsignale können in vorteilhafter Weise von der die Strahlungsquelle enthaltenden Einheit über den Feldbus an die den Detektor enthaltende weitere Einheit übertragen werden. Dies kann beispielsweise durch eine so genannte Slave-Slave-Kommunikation erfolgen. Hierbei handelt es sich um eine Funktion bei dem Feldbus "Profibus", die auch als Datenquerverkehr bezeichnet wird. Die Kommunikation zwischen den als Feldgeräte ausgebildeten Einheiten und der Prozessteuerung erfolgt nach dem Master-Slave-Prinzip; d. h. es gibt in der Prozesssteuerung jeweils ein ausgezeichnetes Gerät, den Master, welcher den Feldbus betreibt, die ihn zugeordneten Slaves (Feldgeräte) parametriert und im zyklischen Betrieb den Datenaustausch durchführt. Bei dem Datenquerverkehr werden bestimmte Daten, hier die weiteren Signale, nicht über den Umweg über den Master, sondern unmittelbar zwischen den Slaves ausgetauscht, was zu einer Entlastung des Masters und einer Verkürzung der Zeit für die Datenübertragung führt. Der Buszyklus verlängert sich nicht wesentlich; eine Mischung von Master-Slave- und Querverkehrsbeziehungen ist beliebig möglich.

Alternativ oder ergänzend zu der Übertragung über den Feldbus kann in vorteilhafter Weise die Strahlungsquelle mit den weiteren Signalen moduliert werden, wobei die weiteren Signale in der weiteren Einheit durch Demodulation von den Messsignalen des Detektors getrennt werden. Die Modulation erfolgt dabei in einer solchen Weise, dass dadurch die selektive Absorption der Strahlung in dem Messgas nicht beeinträchtigt wird. So kann beispielsweise im Falle eines Diodenlaser-Spektrometers, bei dem eine Spektrallinie des Messgases zyklisch wellenlängenabhängig abgetastet wird, die Modulation mit den weiteren Signalen in einem außerhalb der Spektrallinie liegenden Bereich der Abtastung oder in den Lücken zwischen aufeinanderfolgenden Abtastzyklen erfolgen.

Bei einer weiteren Ausführung des erfindungsgemäßen Spektrometers können die Mittel zur Erzeugung des Messergebnisses aus den Messsignalen des Detektors in der die Strahlungsquelle enthaltenden Einheit angeordnet sein, wobei dann die Messsignale von der den Detektor enthaltenden weiteren Einheit über den Feldbus an die die Strahlungsquelle enthaltende Einheit übertragen werden.

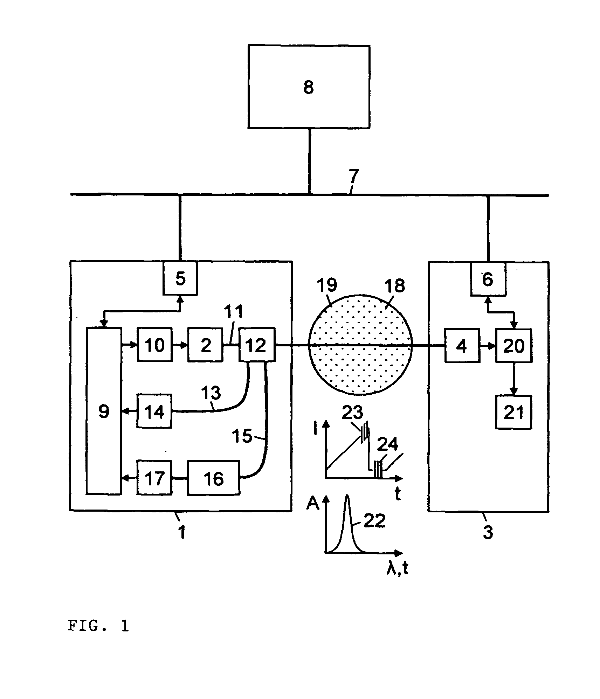

Im Weiteren wird das erfindungsgemäße Spektrometer anhand eines in der Zeichnung dargestellten Ausführungsbeispiels erläutert.

Das hier als sehr vereinfachtes Blockschaltbild dargestellte Prozess-Absorptionsspektrometer besteht aus einer Einheit 1, die als Strahlungsquelle 2 einen durchstimmbaren Diodenlaser aufweist, und einer Einheit 3, die einen photoelektrischen Detektor 4 enthält. Beide Einheiten 1 und 3 sind jeweils als Feldgeräte ausgebildet und über Kommunikationseinrichtungen 5 bzw. 6 an einem Feldbus 7 in einem Prozessautomatisierungssystem angeschlossen, von dem hier nur ein Mastergerät 8 dargestellt ist.

Die Einheit 1 des Spektrometers enthält weiterhin eine Steuereinrichtung 9, die eine Modulationseinrichtung 10 zur wellenlängenabhängigen Modulation der Strahlungsquelle 2 betreibt. Der von der Strahlungsquelle 2 ausgesandte Lichtstrahl 11 wird mittels eines Strahlteilers 12 teilweise über eine Glasfaser 13 auf einen Monitordetektor 14, über eine weitere Glasfaser 15 durch eine mit einem Referenzgas gefüllte Referenzgaszelle 16 auf einen Referenzdetektor 17 und aus der Einheit 1 heraus durch ein Messgas 18, beispielsweise in einem Rohr oder Kamin 19, hindurch zu dem Detektor 4 in der weiteren Einheit 3 geführt. Die von dem Detektor 4 erzeugten Messsignale werden in einer nachgeordneten Auswerteeinrichtung 20 zusammen mit weiteren Signalen zu einem Messergebnis ausgewertet, das zum einen auf einer Anzeige 21 der Einheit 3 visualisiert und zum anderen über die Kommunikationseinrichtung 6 in das Prozessautomatisierungssystem übertragen wird. Bei den erwähnten weiteren Signalen, die zur Erzeugung des Messergebnisses erforderlich sind, handelt es sich um die Referenzsignale des Referenzdetektors 17, die Monitorsignale des Monitordetektors 14 und um Informationen, die die Modulation der Strahlungsquelle 2 betreffen. Diese weiteren Signale werden in der Einheit 1 erzeugt und über die Steuereinrichtung 9 und die Kommunikationseinrichtung 5 auf den Feldbus 7 übertragen, um von der Kommunikationseinrichtung 6 der weiteren Einheit 3 empfangen und an die Auswerteeinrichtung 20 weitergeleitet zu werden. Die Kommunikation zwischen den beiden Einheiten 1 und 3 erfolgt dabei unmittelbar, d. h. unter Umgehung des Masters 8, nach einem auch als Datenquerverkehr bezeichneten Slave-Slave-Übertragungsverfahren.

Ergänzend oder alternativ können die weiteren Signale auch über den Lichtstrahl 11 unmittelbar zwischen den beiden Einheiten 1 und 3 übertragen werden. Wie der Darstellung zu entnehmen ist, wird die Strahlungsquelle 2 durch die Modulationseinrichtung 10 mittels eines rampenförmig ansteigenden Stromes I zyklisch angesteuert um eine Spektrallinie 22 des Messgases 18 wellenlängenabhängig abzutasten. Die von der Einheit 1 an die Einheit 3 zu übertragenden weiteren Signale können dann in einem außerhalb der Spektrallinie 22 liegenden Bereich 23 der Abtastung oder in Abtastlücken 24 zwischen aufeinanderfolgenden Abtastungen aufmoduliert werden.

Alternativ zu dem dargestellten Ausführungsbeispiel können die Auswerteeinrichtung 20 und die Anzeigevorrichtung 21 in der die Strahlungsquelle 2 enthaltende Einheit 1 angeordnet sein, wobei dann die Messsignale des Detektors 4 von der weiteren Einheit 3 über den Feldbus 7 an die die Strahlungsquelle 2 enthaltende Einheit 1 übertragen werden.

Die Stromversorgung der Einheiten 1 und 3 kann separat oder ebenfalls über den Feldbus 7 erfolgen.

## Patentansprüche

1. Prozess-Absorptionsspektrometer mit einer eine Strahlungsquelle (2) enthaltenden Einheit (1) und mindestens einer einen Detektor (4) enthaltenden weiteren Einheit (3), **dadurch gekennzeichnet, daß** beide Einheiten (1, 3) als Feldgeräte ausgebildet und an einem Feldbus (7) angeschlossen sind.

2. Prozess-Absorptionsspektrometer nach Anspruch 1, **dadurch gekennzeichnet , dass** die den Detektor (4) enthaltende weitere Einheit (3) Mittel (20) zur Erzeugung eines Messergebnisses aus Messsignalen des Detektors (4) und weiteren Signalen enthält, die von der die Strahlungsquelle (2) enthaltenden Einheit (1) an die den Detektor (4) enthaltende weitere Einheit (3) übertragen werden.

3. Prozess-Absorptionsspektrometer nach Anspruch 2, **dadurch gekennzeichnet, dass** die weiteren Signale zumindest teilweise über den Feldbus (7) übertragen werden.

4. Prozess-Absorptionsspektrometer nach Anspruch 3, **dadurch gekennzeichnet , dass** die beiden Einheiten (1, 3) über den Feldbus (7) nach einem Slave-Slave-Übertragungsverfahren miteinander kommunizieren.

5. Prozess-Absorptionsspektrometer nach einem der Ansprüche 2 bis 4, **gekennzeichnet durch** eine in der die Strahlungsquelle (2) enthaltenden Einheit (1) vorgesehene Modulationseinrichtung (10) zur Modulation der Strahlungsquelle (2) mit zumindest einem Teil der weiteren Signale und in der weiteren Einheit (3) vorgesehene Mittel, mit denen, die weiteren Signale von den Messsignalen des Detektors (4) **durch** Demodulation getrennt werden.

6. Prozess-Absorptionsspektrometer nach Anspruch 1, d a - **durch gekennzeichnet**, dass die die Strahlungsquelle (2) enthaltende Einheit (1) Mittel zur Erzeugung eines Messergebnisses aus Messsignalen des Detektors (4) enthält und dass die Messsignale von der weiteren Einheit (3) über den Feldbus (7) an die die Strahlungsquelle (2) enthaltende Einheit (1) übertragen werden.

## Claims

1. Process absorption spectrometer with a unit (1) containing a source of radiation (2) and at least one additional unit (3) containing a detector (4), **characterised in that** both units (1, 3) are designed as pieces of field equipment and are connected to a field bus (7).

2. Process absorption spectrometer according to claim 1, **characterised in that**, the additional unit (3) containing the detector (4) contains means (20) to generate a measurement result from measurement signals of the detector (4) and additional signals which are transmitted from the unit (1) containing the source of radiation (2) to the additional unit (3) containing the detector (4).

3. Process absorption spectrometer according to claim 2, **characterised in that** the additional signals are at least partially transmitted via the field bus (7).

4. Process absorption spectrometer according to claim 3, **characterised in that** the two units (1, 3) communicate with one another via the field bus (7) according to a slave-slave transmission method.

5. Process absorption spectrometer according to one of claims 2 to 4, **characterised by** a modulation facility (10) provided in the unit (1) containing the source of radiation (2) for modulating the source of radiation (2) with at least one part of the additional signals, and by means provided in the additional unit (3) with which the further signals are separated from the measurement signals of the detector (4) by means of demodulation.

6. Process absorption spectrometer according to claim 1, **characterised in that** the unit (1) containing the source of radiation (2) contains means for generating a measurement result from measurement signals of the detector (4) and that the measurement signals are transmitted from the additional unit (3) to the unit (1) containing the source of radiation (2) via the field bus (7).

## Revendications

1. Spectromètre d'absorption pour processus, comprenant une unité ( 1 ) comportant une source ( 2 ) de rayonnement et au moins une autre unité ( 3 ) comportant un détecteur, **caractérisé en ce que** les deux unités ( 1, 3 ) sont constituées sous la forme d'appareils de terrain et sont raccordées à un bus ( 7 ) de terrain.

2. Spectromètre d'absorption pour processus, suivant la revendication 1, **caractérisé en ce que** l'autre unité ( 3 ) comportant le détecteur comporte des moyens ( 1 ) de production d'un résultat de mesure à partir de signaux de mesure du détecteur ( 4 ) et d'autres signaux qui sont transmis à l'autre unité ( 3 ) comportant le détecteur ( 4 ) par l'unité ( 1 ) comportant la source ( 2 ) de rayonnement.

3. Spectromètre d'absorption pour processus, suivant la revendication 2, **caractérisé en ce que** les autres signaux sont transmis au moins en partie par le bus ( 7 ) de terrain.

4. Spectromètre d'absorption pour processus, suivant la revendication 3, **caractérisé en ce que** les deux unités ( 1, 3 ) communiquent entre elles par le bus ( 7 ) de terrain suivant un procédé de transmission esclave-esclave.

5. Spectromètre d'absorption pour processus, suivant l'une des revendications 2 à 4, **caractérisé par** un dispositif ( 10 ) de modulation prévu, dans l'unité ( 1 ) comportant la source ( 2 ) de rayonnement, pour la modulation de la source ( 2 ) de rayonnement par au moins une partie des autres signaux et il est prévu dans l'autre unité ( 3 ) des moyens qui séparent par démodulation les autres signaux de mesure du détecteur ( 4 ).

6. Spectromètre d'absorption pour processus, suivant la revendication 1, **caractérisé en ce que** l'unité ( 1 ) comportant la source de rayonnement comporte des moyens de production d'un résultat de mesure à partir de signaux de mesure du détecteur ( 4 ) et **en ce que** les signaux de mesure de l'autre unité ( 3 ) sont transmis à l'unité ( 1 ) comportant la source ( 2 ) de rayonnement par le bus ( 7 ) de terrain.
